# EUROPEAN PATENT APPLICATION

(11) **EP 4 187 659 A1**
(43) Date of publication of application: **31.05.2023**
(21) Application number: 21901087.3
(22) Date of filing: 03.12.2021
(51) Int. Cl.: H01M 10/04, H01M 50/531

(54) **FLEXIBLE ELECTRODE ASSEMBLY AND BATTERY COMPRISING SAME**

(30) Priority: 04.12.2020 KR 20200168983
(71) Applicant: Samsung Electronics Co., Ltd., Suwon-si, Gyeonggi-do 16677 (KR)
(72) Inventor: JEON, Yongsub, Suwon-si Gyeonggi-do 16677 (KR); HEO, Changryong, Suwon-si Gyeonggi-do 16677 (KR); JANG, Kiyoun, Suwon-si Gyeonggi-do 16677 (KR); CHO, Chihyun, Suwon-si Gyeonggi-do 16677 (KR); CHOI, Jaeman, Suwon-si Gyeonggi-do 16677 (KR); PYUN, Jooyil, Suwon-si Gyeonggi-do 16677 (KR)
(74) Representative: Gulde & Partner
(86) International application number: PCT/KR2021/018275
(87) International publication number: WO 2022/119399

(57) **Abstract**

According to an embodiment disclosed in the present disclosure, there is provided an electronic device including: an electrode assembly comprising a plurality of anode substrates, a plurality of cathode substrates, and a separation membrane disposed between each of the anode substrates and each of the cathode substrates, respective anode substrates and respective cathode substrates being alternately arranged, wherein each of the anode substrates includes a first coating portion, a second coating portion, and a first non-coating portion disposed between the first coating portion and the second coating portion, wherein each of the cathode substrates includes a third coating portion, a fourth coating portion, and a second non-coating portion disposed between the third coating portion and the fourth coating portion, wherein the first non-coating portion and the second non-coating portion are configured to form a wrinkle pattern, wherein the electrode assembly has a first height, and wherein a first length corresponding to a flat state of a first wrinkle pattern positioned at a center of the first height is shorter than a second length corresponding to a flat state of a second wrinkle pattern positioned at a point higher than the center of the first height, and the first length is shorter than a third length corresponding to a flat state of a third wrinkle pattern positioned at a point lower than the center of the first height.

## Description

### Technical Field

The disclosure relates to a flexible electrode assembly and a battery including the same.

### Background Art

As a foldable electronic device (for example, a foldable smartphone) has a battery embedded therein, the battery may require flexibility according to a shape or an operation of the foldable electronic device. Accordingly, flexible batteries having flexibility are being developed. An electrode substrate (for example, an anode substrate, a cathode substrate), which is a component of an electrode assembly, may include a non-coating portion that is not coated with an active material (for example, an anode active material, a cathode active material) in order to implement a flexible battery.

### Disclosure of Invention

### Technical Problem

Because of repetitive folding of the flexible battery, a stress may be concentrated on the non-coating portion that is not coated with the active material, and a crack may occur. In addition, a tensile stress may be more concentrated on an outer edge of the non-coating portion of the flexible battery than an inner portion, and accordingly, a local damage (for example, disconnection) may occur.

Embodiments of the disclosure provide a method for ensuring flexibility of an electrode assembly while reducing a non-coating portion of an electrode substrate.

### Solution to Problem

According to an example embodiment of the present disclosure, there is provided an electronic device including: an electrode assembly including a plurality of anode substrates, a plurality of cathode substrates, and a separation membrane disposed between each of the anode substrates and each of the cathode substrates, the respective anode substrates and the respective cathode substrates being alternately arranged, wherein each of the anode substrates includes a first coating portion, a second coating portion, and a first non-coating portion disposed between the first coating portion and the second coating portion, wherein each of the cathode substrates includes a third coating portion, a fourth coating portion, and a second non-coating portion disposed between the third coating portion and the fourth coating portion, wherein the first non-coating portion and the second non-coating portion form a wrinkle pattern, wherein the electrode assembly has a first height, and wherein a first length corresponding to a flat state of a first wrinkle pattern positioned at a center of the first height is less than a second length corresponding to a flat state of a second wrinkle pattern positioned at a point higher than the center of the first height, and a third length corresponding to a flat state of a third wrinkle pattern positioned at a point lower than the center of the first height.

According to an example embodiment of the present disclosure, there is provided an electronic device including: an electrode assembly including a plurality of anode substrates, a plurality of cathode substrates, and a separation membrane disposed between each of the anode substrates and each of the cathode substrates, the respective anode substrates and the respective cathode substrates being alternately arranged, wherein each of the anode substrates includes a first coating portion, a second coating portion, a third coating portion, a first non-coating portion disposed between the first coating portion and the second coating portion, and a second non-coating portion disposed between the second coating portion and the third coating portion, wherein each of the cathode substrates includes a fourth coating portion, a fifth coating portion, a sixth coating portion, a third non-coating portion disposed between the fourth coating portion and the fifth coating portion, and a fourth non-coating portion disposed between the fifth coating portion and the sixth coating portion, wherein the first non-coating portion, the second non-coating portion, the third non-coating portion, and the fourth non-coating portion form a wrinkle pattern, wherein the electrode assembly has a first height, and wherein a first length corresponding to a flat state of a first wrinkle pattern positioned at a center of the first height is less than a second length corresponding to a flat state of a second wrinkle pattern positioned at a point higher than the center of the first height, and a third length corresponding to a flat state of a third wrinkle pattern positioned at a point lower than the center of the first height.

### Advantageous Effects of Invention

According to various example embodiments, flexibility of an electrode assembly can be ensured by providing a wrinkle pattern to a non-coating portion. Flexibility in both directions can be ensured by increasing the number of wrinkle patterns from the center of an electrode assembly toward outer edges.

In addition, various effects that can be directly or indirectly understood through the present disclosure may be provided.

### Brief Description of Drawings

The above and other aspects, features and advantages of certain embodiments of the present disclosure will be more apparent from the following detailed description, taken in conjunction with the accompanying drawings, in which:
FIG. 1Ais a diagram illustrating an example electrode substrate and a wrinkle pattern according to various embodiments;
FIG. 1B is a diagram illustrating a coated electrode substrate and a wrinkle pattern according to various embodiments;
FIG. 1C is a diagram illustrating an electrode assembly of a stack type which is formed by stacking an electrode substrate and a separation membrane according to various embodiments;
FIG. 2Ais a diagram illustrating an electrode substrate of a jelly roll type and a wrinkle pattern according to various embodiments;
FIG. 2B is a diagram illustrating a coated electrode substrate of a jelly roll type and a wrinkle pattern according to various embodiments;
FIG. 2C is a diagram illustrating an electrode assembly of a jelly roll type formed by winding an electrode substrate and a separation membrane according to various embodiments;
FIG. 3 is a diagram illustrating a pouch type flexible battery according to various embodiments;
FIG. 4A is a diagram illustrating wrinkle patterns according to various embodiments;
FIG. 4B is a diagram illustrating wrinkle patterns according to various embodiments;
FIG. 5A is a diagram illustrating a shape of a wrinkle pattern having flexibility in both directions according to various embodiments;
FIG. 5B is a diagram illustrating a shape of a wrinkle pattern having flexibility in both directions according to various embodiments;
FIGS. 6A and 6B are diagrams illustrating an electrode substrate having two wrinkle patterns according to various embodiments;
FIGS. 7A and 7B are diagrams illustrating an electrode substrate having a wrinkle pattern in a vertical direction according to various embodiments;
FIGS. 8A and 8B are diagrams illustrating an electrode substrate having a wrinkle pattern in horizontal and vertical directions according to various embodiments; and
FIGS. 9A and 9B are diagrams illustrating an electrode assembly of a jelly roll type formed through an electrode substrate having a wrinkle pattern in horizontal and vertical directions according to various embodiments.

Regarding descriptions of the drawings, the same or similar reference numerals may be used for the same or similar components.

### Best Mode for Carrying out the Invention

Hereinafter, various example embodiments will be described with reference to the accompanying drawings. However, these do not limit a specific embodiment, and should be understood as including various modifications, equivalents, and/or alternatives of embodiments.

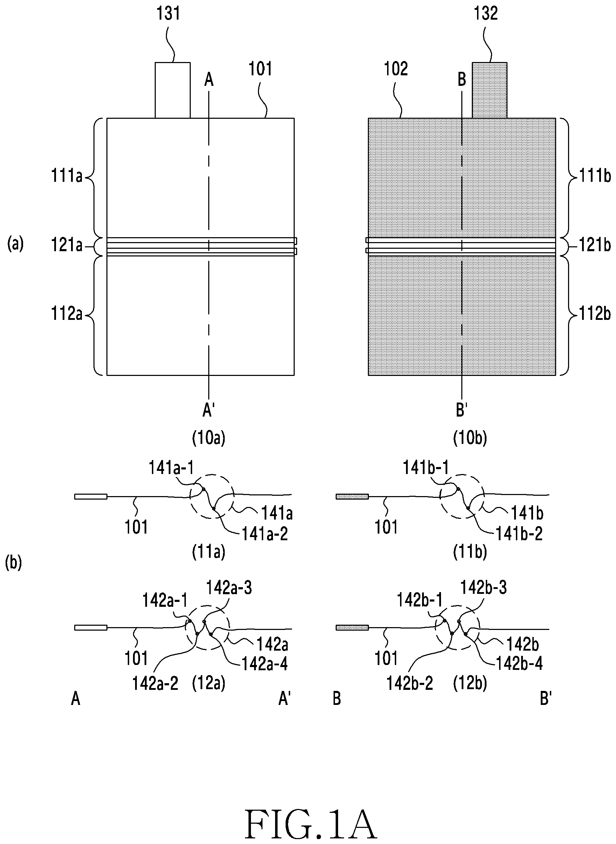

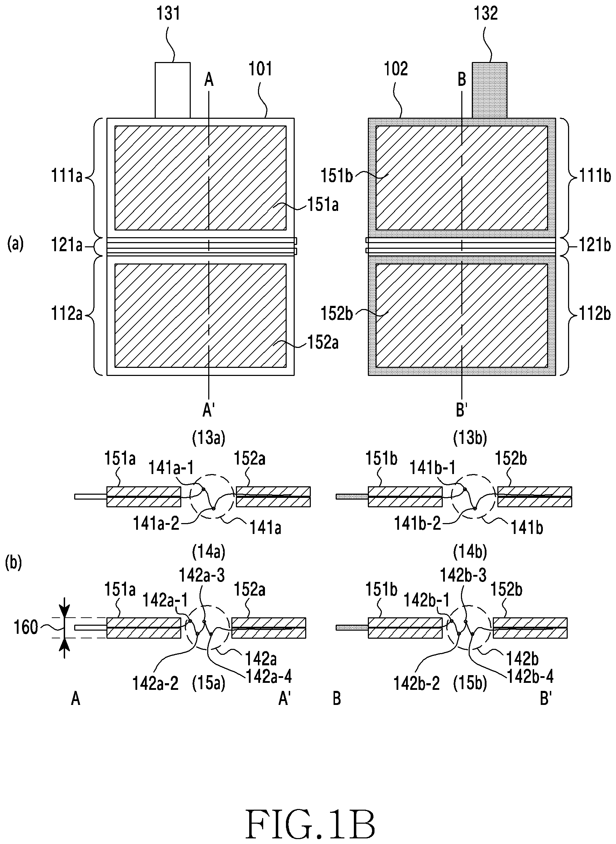

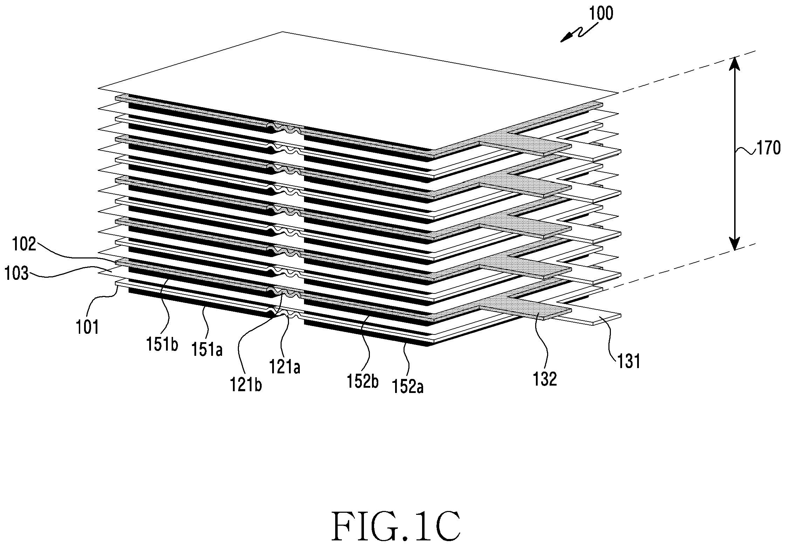

FIG. 1Ais a diagram illustrating an example electrode substrate and a wrinkle pattern according to various embodiments.

Referring to FIG. 1A, (a) illustrates an anode substrate 101 connected with an anode tab 131, and a cathode substrate 102 connected with a cathode tab 132, and (b) of FIG. 1A illustrates an A-A' cross section indicting the anode substrate 101 and wrinkle patterns 141a, 142a, and a B-B' cross section indicating the anode substrate 102 and wrinkle patterns 141b, 142b.

Referring to 10a of FIG. 1A, the anode substrate 101 may be connected with the anode tab 131. The anode substrate 101 may include a first portion 111a, a second portion 112a, and a folding portion 121a on which the first portion 111a and the second portion 112a are foldable while forming a predetermined angle.

Referring to 10b of FIG. 1A, the cathode substrate 102 may be connected with the cathode tab 132. The cathode substrate 102 may include a first portion 111b, a second portion 112b, and a folding portion 121b on which the first portion 111b and the second portion 112b are foldable while forming a predetermined angle.

Referring to 11a of FIG. 1A, the anode substrate 101 may include a wrinkle pattern 141a, and may form the folding portion 121a. The wrinkle pattern 141a may form two folding axes (for example, a first folding axis 141a-1, a second folding axis 141a-2), and may be formed of one wrinkle.

Referring to 12a of FIG. 1A, the anode substrate 101 may include a wrinkle pattern 142a, and may form the folding portion 121a. The wrinkle pattern 142a may form four folding axes (for example, a first folding axis 142a-1, a second folding axis 142a-2, a third folding axis 142a-3, a fourth folding axis 142a-4), and may be formed of two wrinkles.

Referring to 11b of FIG. 1A, the cathode substrate 102 may include a wrinkle pattern 141b, and may form the folding portion 121b. The wrinkle pattern 141b may form two folding axes (for example, a first folding axis 141b-1, a second folding axis 141b-2), and may be formed of one wrinkle.

Referring to 12b of FIG. 1A, the cathode substrate 102 may include a wrinkle pattern 142b, and may form the folding portion 121b. The wrinkle pattern 142b may form four folding axes (for example, a first folding axis 142b-1, a second folding axis 142b-2, a third folding axis 142b-3, a fourth folding axis 142b-4), and may be formed of two wrinkles.

According to an embodiment, the number of the folding axes is not limited to the above-described example.

FIG. 1B is a diagram illustrating a coated electrode substrate and a wrinkle pattern according to various embodiments.

Referring to FIG. 1B, (a) illustrates a coated anode substrate 101 and a coated cathode substrate 102, and (b) of FIG. 1B illustrates an A-A' cross section indicating the coated anode substrate 101 and wrinkle patterns 141a, 142a, and a B-B' cross section indicating the coated cathode substrate 102 and wrinkle patterns 141b, 142b. The electrode substrate may include the anode substrate 101 and the cathode substrate 102. The coating may refer, for example, to an electrode active material being coated over at least one surface of the electrode substrate. For example, the coating may refer, for example, to an anode active material being coated over at least one surface of the anode substrate or a cathode active material being coated over at least one surface of the cathode substrate.

According to an embodiment, the anode substrate 101 may, for example, and without limitation, be formed with aluminum, stainless steel, titanium, copper, silver, or metal which is a combination of materials selected from the above-mentioned materials. The anode active material may be coated over a surface of the anode substrate 101. For example, the anode active material may be coated over one surface or both surfaces of the anode substrate 101.

According to an embodiment, the cathode substrate 102 may, for example, and without limitation, be formed with at least one metal selected from the group consisting of copper, stainless steel, nickel, aluminum, and titanium. The cathode active material may be coated over a surface of the cathode substrate 102. For example, the cathode active material may be coated over one surface or both surfaces of the cathode substrate 102.

According to an embodiment, the anode active material may be formed with a material that is capable of reversibly intercalating and de-intercalating lithium ions. For example, the anode active material may include at least one material selected from the group consisting of lithium transition metal oxides such as a lithium cobalt oxide, a lithium nickel oxide, a lithium nickel cobalt oxide, a lithium nickel cobalt aluminum oxide, a lithium nickel cobalt manganese oxide, a lithium manganese oxide, and lithium iron phosphate, nickel sulfides, copper sulfides, sulfur, iron oxides, and vanadium oxides.

According to an embodiment, the surface of the anode substrate 101 may further be coated with a binder (not shown) and a conductive additive (carbon additive) (not shown), in addition to the anode active material. The conductive additive may refer to minute powder carbon that is added in a small amount in order to enhance conductivity between active material particles or with a metal current collector in the electrode, and to prevent and/or reduce the binder from acting as an insulator.

According to an embodiment, the binder may include at least one material selected from the group consisting of polyvinylidene fluoride-containing binders such as polyvinylidene fluoride, vinylidene fluoride/hexafluoropropylene copolymer, vinylidene fluoride/tetrafluoroethylene copolymer, carboxymethyl cellulose-containing binders such as sodium-carboxymethyl cellulose, lithium-carboxymethyl cellulose, acrylate-containing binders such as polyacrylic acid, lithium-polyacrylic acid, acrylic, polyacrylonitrile, polymethyl methacrylate, polybutylacrylate, polyimide-imides, polytetrafluoroethylene, polyethylene oxide, polypyrrole, lithium-Nafion, and styrene butadiene rubber-containing polymers.

According to an embodiment, the conductive additive may include at least one material selected from the group consisting of carbon-containing conducting agents such as carbon black, carbon fiber, and graphite, a conductive fiber such as metal powder, metal power such as carbon fluoride powder, zinc oxides, and nickel powder, a conductive whisker such as zinc oxides and potassium titanate, conductive metal oxides such as titanium oxides, and conductive polymers such as polyphenylene derivates.

According to an embodiment, the cathode active material may be formed with a material capable of forming an alloy with lithium, or a material capable of reversibly intercalating and de-intercalating lithium. For example, the cathode active material may include at least one material selected from the group consisting of metals, carbon-containing materials, metal oxides, and lithium metal nitrides.

According to an embodiment, the metals may include at least one material selected from the group consisting of lithium, silicon, magnesium, calcium, aluminum, germanium, tin, lead, arsenic, antimony, bismuth, silver, gold, zinc, cadmium, mercury, copper, iron, nickel, cobalt, and indium.

According to an embodiment, the carbon-containing materials may include at least one material selected from the group consisting of graphite, a graphite carbon fiber, coke, meso carbon microbeads (MCMBS), polyacene, a pitch-derived carbon fiber, and hard carbon.

According to an embodiment, the metal oxides may include at least one selected from the group consisting of lithium titanium oxides, titanium oxides, molybdenum oxides, niobium oxides, iron oxides, tungsten oxides, tin oxides, amorphous tin oxide composites, silicon monoxide, cobalt oxides and nickel oxides.

According to an embodiment, the surface of the cathode substrate 102 may further be coated with a binder and a conductive additive in addition to the cathode active material. The binder and the conductive additive may be the same as or similar to the binder and the conductive additive coated over the anode substrate 101.

Referring to 13a of FIG. 1B, a first portion 111a and a second portion 112a of the anode substrate 101 may be coated with the anode active material, and a folding portion 121a may not be coated with the anode active material. The portion of the anode substrate 101 that is coated with the anode active material may be understood as a coating portion, and the portion that is not coated with the anode active material may be understood as a non-coating portion. For example, the anode substrate 101 may include a first coating portion 151a, a second coating portion 152a, and a first non-coating portion. The first non-coating portion may be positioned between the first coating portion 151a and the second coating portion 152a, and may be understood as the folding portion 121a that is not coated with the anode active material.

Referring to 13b of FIG. 1B, a first portion 111b and a second portion 112b of the cathode substrate 102 may be coated with the cathode active material, and a folding portion 121b may not be coated with the cathode active material. The portion of the cathode substrate 102 that is coated with the cathode active material may be understood as a coating portion, and the portion that is not coated with the cathode active material may be understood as a non-coating portion. For example, the cathode substrate 102 may include a third coating portion 151b, a fourth coating portion 152b, and a second non-coating portion. The second non-coating portion may be positioned between the third coating portion 151b and the fourth coating portion 152b, and may be understood as the folding portion 121b that is not coated with the cathode active material.

Referring to 14a of FIG. 1B, the anode substrate 101 that is coated with the anode active material may include the wrinkle pattern 141a, and may form the folding portion 121a. The wrinkle pattern 141a may form two folding axes (for example, the first folding axis 141a-1, the second folding axis 141a-2) and may be formed of one wrinkle.

Referring to 15a of FIG. 1B, the anode substrate 101 that is coated with the anode active material may include the wrinkle pattern 142a and may form the folding portion 121a. The wrinkle pattern 142a may form four folding axes (for example, the first folding axis 142a-1, the second folding axis 142a-2, the third folding axis 142a-3, the fourth folding axis 142a-4), and may be formed of two wrinkles.

Referring to 14b of FIG. 1B, the cathode substrate 102 that is coated with the cathode active material may include the wrinkle pattern 141b, and may form the folding portion 121b. The wrinkle pattern 141b may form two folding axes (for example, the first folding axis 141b-1, the second folding axis 141b-2) and may be formed of one wrinkle.

Referring to 15b of FIG. 1B, the cathode substrate 102 that is coated with the cathode active material may include the wrinkle pattern 142b and may form the folding portion 121b. The wrinkle pattern 142b may form four folding axes (for example, the first folding axis 142b-1, the second folding axis 142b-2, the third folding axis 142b-3, the fourth folding axis 142b-4), and may be formed of two wrinkles.

FIG. 1C is a diagram illustrating an electrode assembly 100 of a stack type which is formed by stacking an electrode substrate and a separation membrane according to various embodiments.

Referring to FIG. 1C, the electrode assembly 100 may include an anode substrate 101 having an anode tab 131 connected thereto, a cathode substrate 102 having a cathode tab 132 connected thereto, and a separation member (e.g., separation membrane) 103 disposed between the anode substrate 101 and the cathode substrate 102. The electrode assembly 100 may be formed by alternately arranging the anode substrate 101 and the cathode substrate 102.

According to an embodiment, the electrode assembly 100 may have the anode substrate 101 and the cathode substrate 102 stacked alternately to have a first height 170.

According to an embodiment, the electrode assembly 100 may be formed to have the first height 170 by alternately stacking the anode substrate 101, which includes a first coating portion 151a, a second coating portion 152a, and a folding portion 121a corresponding to a non-coating portion, and the cathode substrate 102, which includes a third coating portion 151b, a fourth coating portion 152b, and a folding portion 121b corresponding to a non-coating portion.

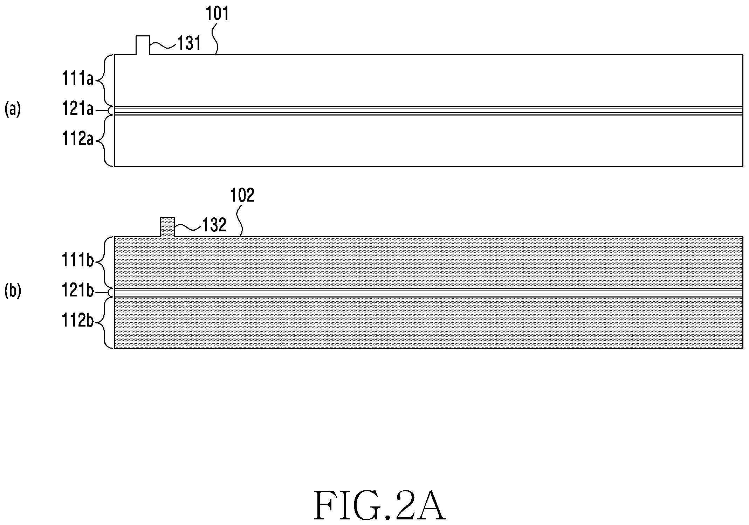

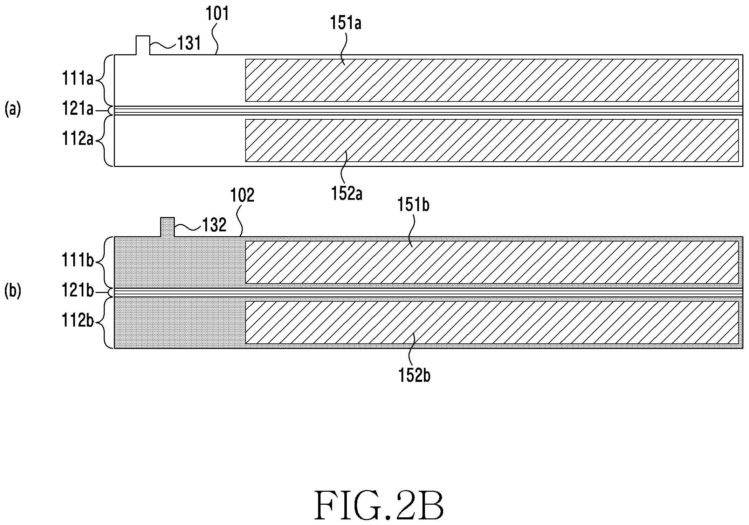

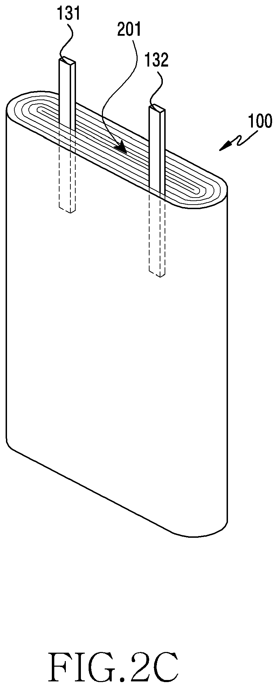

FIG. 2Ais a diagram illustrating an electrode substrate of a jelly roll type and a wrinkle pattern according to various embodiments.

Referring to FIG. 2A, (a) illustrates an anode substrate 101 for fabricating a battery of a jelly roll type, and (b) of FIG. 2A illustrates a cathode substrate 102 for fabricating the battery of the jelly roll type.

Referring to (a) of FIG. 2A, an anode tab 131 may be attached to the anode substrate 101. The anode substrate 101 may be divided into a first portion 111a and a second portion 112a with reference to a folding portion 121a.

Referring to (b) of FIG. 2A, a cathode tab 132 may be attached to the cathode substrate 102. The cathode substrate 102 may be divided into a first portion 111b and a second portion 112b with reference to a folding portion 121b.

FIG. 2B is a diagram illustrating a coated electrode substrate of a jelly roll type and a wrinkle pattern according to various embodiments.

Referring to FIG. 2B, (a) illustrates an anode substrate 101 for fabricating a battery of a jelly roll type that is coated with an anode active material, and (b) of FIG. 2B illustrates a cathode substrate 102 for fabricating the battery of the jelly roll type that is coated with a cathode active material.

Referring to (a) of FIG. 2B, the anode substrate 101 may include a first coating portion 151a which is formed by coating an anode active material over at least part of a first portion 111a, and a second coating portion 152a which is formed by coating an anode active material over at least part of a second portion 112a. A folding portion 121a may be understood as a non-coating portion that is not coated with an anode active material.

Referring to (b) of FIG. 2B, the cathode substrate 102 may include a third coating portion 151b which is formed by coating a cathode active material over at least part of a first portion 111b, and a fourth coating portion 152b which is formed by coating a cathode active material over at least part of a second portion 112b. A folding portion 121b may be understood as a non-coating portion that is not coated with a cathode active material.

FIG. 2C is a diagram illustrating an electrode assembly of a jelly roll type formed by winding an electrode substrate and a separation membrane according to various embodiments.

Referring to FIG. 2C, the electrode assembly 100 may be formed in such a shape that it is wound in sequence while surrounding an anode tab 131 and a cathode tab 132 with reference to a center area 201.

According to an embodiment, an anode may include an anode substrate 101, an anode active material coated over one surface of the anode substrate 101, and the anode tab 131 attached to one surface of the anode substrate 101. A cathode may include a cathode substrate 102, a cathode active material coated over one surface of the cathode substrate 102, and the cathode tab 132 attached to one surface of the cathode substrate 102. A separation membrane 103 may be disposed between the anode and the cathode or may be disposed between the anode substrate 101 and the cathode substrate 102.

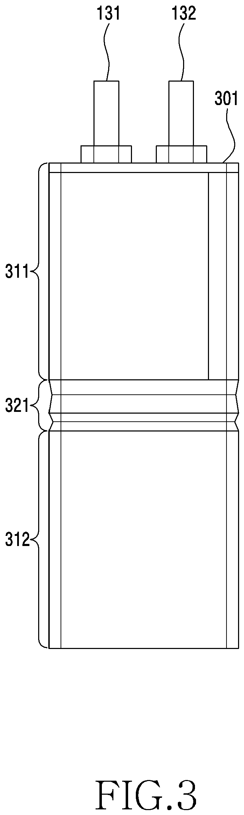

FIG. 3 is a diagram illustrating a pouch type flexible battery 301 according to various embodiments.

Referring to FIG. 3, the flexible battery 301 may be fabricated by accommodating an electrode assembly 100 in a pouch. The pouch may refer to a case of the electrode assembly 100. The pouch may accommodate the electrode assembly 100 to expose a portion of an anode tab 131 and a cathode tab 132 of the electrode assembly 100 to the outside of the pouch. The electrode assembly 100 may include an electrode assembly 100 of a stack type which is formed by stacking an anode substrate 101, a separation membrane 103, and a cathode substrate 102 in sequence, and an electrode assembly 100 of a jelly roll type which is formed by being wound around a center point.

According to an embodiment, the flexible battery 301 may include a first area 311, a second area 312, and a folding area 321 disposed between the first area 311 and the second area 312. The flexible battery 301 may have the second area 312 folded with respect to the first area 311 with reference to the folding area 321 to form a predetermined angle.

According to an embodiment, the first area 311 of the flexible battery 301 may correspond to an area of the pouch that encloses a first portion 111a of the anode substrate 101 and a first portion 111b of the cathode substrate 102. The second area 312 of the flexible battery 301 may correspond to an area of the pouch that encloses a second portion 112a of the anode substrate 101 and a second portion 112b of the cathode substrate 102. The folding area 321 of the flexible battery 301 may correspond to an area of the pouch that encloses a folding portion 121a of the anode substrate 101 and a folding portion 121b of the cathode substrate 102.

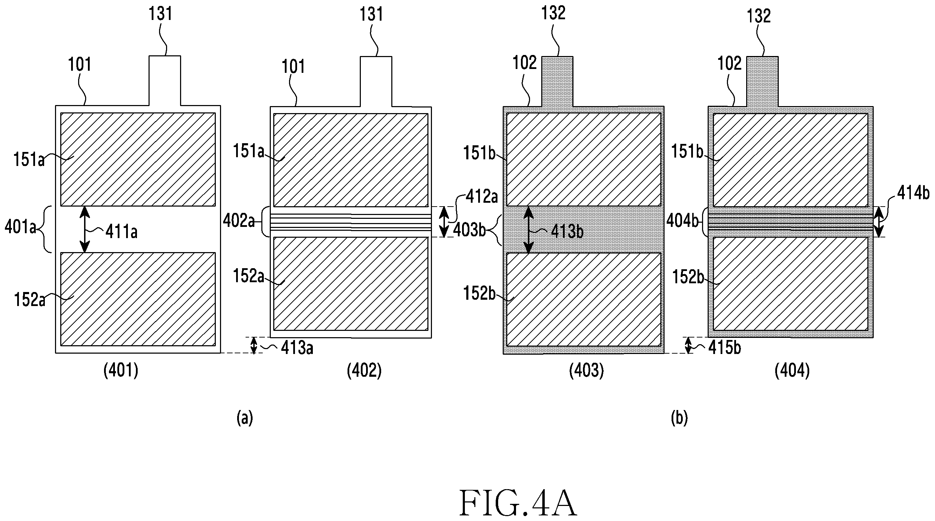

FIG. 4A is a diagram illustrating wrinkle patterns according to various embodiments.

Referring to FIG. 4A, (a) illustrates a wrinkle pattern which is added to an anode substrate 101, and (b) of FIG. 4A illustrates a wrinkle pattern which is added to a cathode substrate 102.

Referring to (a) of FIG. 4A, in a state 401, the anode substrate 101 may include a first coating portion 151a, a second coating portion 152a, and a non-coating portion 401a. The first coating portion 151a and the second coating portion 152a may refer to portions that are coated with an anode active material. The non-coating portion 401a may refer to a portion that is not coated with an anode active material. The non-coating portion 401a may be formed to be flat without forming a wrinkle pattern. The non-coating portion 401a may have a length 411a between the first coating portion 151a and the second coating portion 152a.

According to an embodiment, in a state 402, the anode substrate 101 may include the first coating portion 151a, the second coating portion 152a, and a non-coating portion 402a. The non-coating portion 402a may refer to a portion that is not coated with an anode active material, and may form a wrinkle pattern 402a. The non-coating portion 402a may have a length 412a between the first coating portion 151a and the second coating portion 152a.

Referring to (a) of FIG. 4A, a size of the portion (for example, the first coating portion 151a, the second coating portion 152a) that is coated with the anode active material in the state 401 may be the same as a size of the portion (for example, the first coating portion 151a, the second coating portion 152a) that is coated with the anode active material in the state 402. The size of the portion that is coated with the anode active material may be proportional to a size of a capacity of the battery. For example, as the size of the portion coated with the active material is larger, the capacity of the battery may be larger, and, as the size of the portion coated with the active material is smaller, the capacity of the battery may be smaller.

According to an embodiment, the capacity of the battery that is fabricated using the anode substrate 101 in the state 401 may be the same as the capacity of the battery that is fabricated using the anode substrate 101 in the state 402. A volume of the battery in the state 402 may be smaller than a volume of the battery in the state 401 by a width 413a. The battery in the state 402 may have a smaller volume than that of the battery in the state 401, and may have the same capacity.

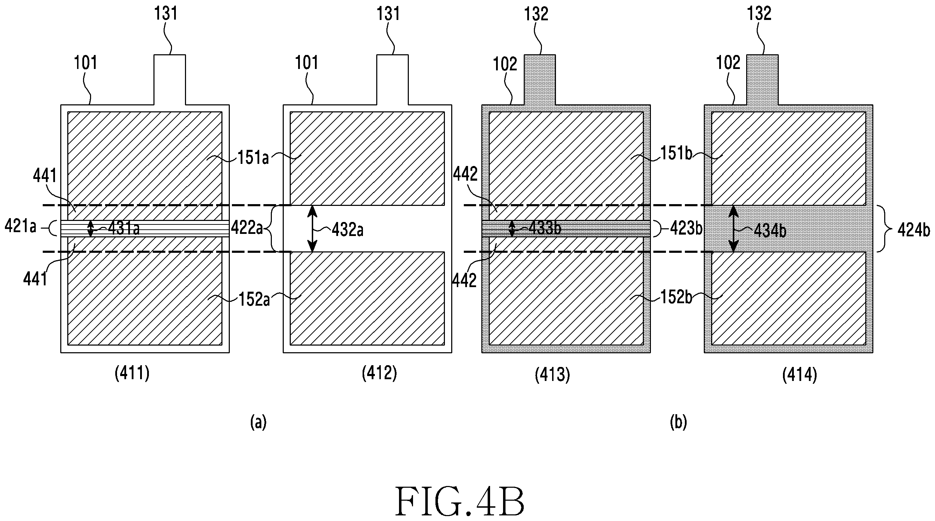

Referring to FIG. 4A, (b) illustrates the cathode substrate 102 coated with a cathode active material, and substantial descriptions of the anode substrate 101 in (a) of FIG. 4A may be equally applied to the cathode substrate 102 shown in (b) of FIG. 4A.

Referring to (b) of FIG. 4A, a size of the portion (for example, a first coating portion 151b, a second coating portion 152b) that is coated with a cathode active material in a state 403 may be the same as a size of the portion (for example, a first coating portion 151b, a second coating portion 152b) that is coated with a cathode active material in a state 404. A non-coating portion 404b in the state 404 may refer to a portion that is not coated with a cathode active material. The non-coating portion 404b may form a wrinkle pattern. The non-coating portion 404b may have a length 414b between the first coating portion 151b and the second coating portion 152b.

According to an embodiment, a volume of the battery in the state 404 may be smaller than a volume of the battery in the state 403 by a width 415b. The battery in the state 404 may have a smaller volume than that of the battery in the state 403, and may have the same capacity.

FIG. 4B is a diagram illustrating example effects of wrinkle patterns according to various embodiments.

Referring to (a) of FIG. 4B, in a state 411, the anode substrate 101 may include a first coating portion 151a, a second coating portion 152a, and a non-coating portion 421a. The first coating portion 151a and the second coating portion 152a may refer to portions that are coated with an anode active material. The non-coating portion 421a may refer to a portion that is not coated with an anode active material. The non-coating portion 421a may form a wrinkle pattern. The non-coating portion 421a may have a length 431a between the first coating portion 151a and the second coating portion 152a.

According to an embodiment, in a state 412, the anode substrate 101 may include the first coating portion 151a and the second coating portion 152a, and a non-coating portion 422a. The non-coating portion 422a may be formed to be flat without forming a wrinkle pattern. The non-coating portion 422a may have a length 432a between the first coating portion 151a and the second coating portion 152a.

According to an embodiment, a size of the portion that is coated with the anode active material may be proportional to a size of a capacity of the battery. For example, as the size of the portion coated with the active material is larger, the capacity of the battery may be larger, and, as the size of the portion coated with the active material is smaller, the capacity of the battery may be smaller. In another example, if the volume of the battery is the same, as the size of the non-coating portion increases, the size of the coating portion may be reduced and the capacity of the battery may be reduced. If the volume of the battery is the same, as the size of the non-coating portion is reduced, the size of the coating portion may increase and the capacity of the battery may increase.

According to an embodiment, the size of the coating portion (for example, the first coating portion 151a, the second coating portion 152) in the state 411 may be larger than the size of the coating portion (for example, the first coating portion 151a, the second coating portion 152a) in the state 412 by an area 441. If the battery in the state 411 and the battery in the state 412 have the same volume, the size of the non-coating portion may be reduced as much as reduction from the length 432a to the length 431a by the wrinkle pattern 421a in the state 411. The size of the coating portion may increase by the size of the area 441 which corresponds to reduction of the size of the non-coating portion. The battery in the state 411 may have the same volume as the battery in the state 412, but may have a larger capacity than that of the battery in the state 412.

Referring to FIG. 4B, (b) illustrates the cathode substrate 102 coated with a cathode active material, and substantial descriptions of the anode substrate 101 of (a) of FIG. 4B may be equally applied to the cathode substrate 102 shown in (b) of FIG. 4B.

Referring to (b) of FIG. 4B, a size of a portion (for example, a first coating portion 151b, a second coating portion 152b) coated with a cathode active material in a state 413 may be larger than a size of a portion coated with a cathode active material a state 414 by an area 442. If the battery in the state 413 and the battery in the state 414 have the same volume, a size of a non-coating portion may be reduced as much as reduction from a length 434b to a length 433b by a wrinkle pattern 423b in the state 413. The size of the coating portion may increase by the size of the area 442 which corresponds to reduction of the size of the non-coating portion. The battery in the state 413 may have the same volume as the battery in the state 414, but may have a larger capacity than that of the battery in the state 414.

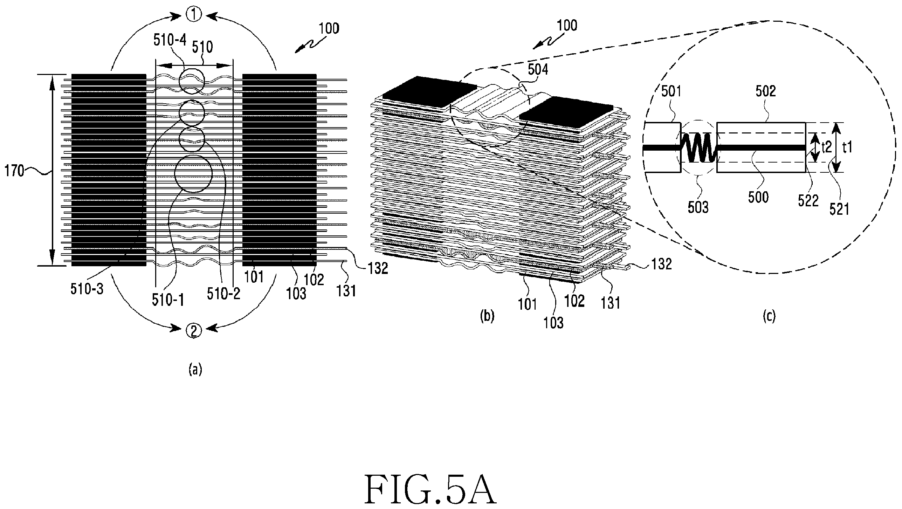

FIG. 5A is a diagram illustrating a shape of a wrinkle pattern having flexibility in both directions according to various embodiments.

Referring to FIG. 5A, (a) illustrates an electrode assembly 100 which is formed by stacking an anode substrate 101, a separation membrane 103, and a cathode substrate 102 in sequence by a first height 170, (b) of FIG. 5A illustrates the electrode assembly 100 as viewed from a side, and (c) of FIG. 5A is an enlarged view of a portion of the electrode assembly 100.

Referring to (a) of FIG. 5A, the electrode assembly 100 may include a non-coating portion 510 which forms a wrinkle pattern, and may include coating portions (for example, a first coating portion, a second coating portion) on both sides with reference to the non-coating portion 510.

According to an embodiment, the electrode assembly 100 may include a first wrinkle pattern positioned at a first point 510-1 which is the center of the first height 170, a second wrinkle pattern which is positioned at a second point 510-2 higher than the first point 510-1 of the first height 170, a third wrinkle pattern which is positioned at a third point 510-3 higher than the second point 510-2, and a fourth wrinkle pattern which is positioned at a fourth point 510-4 higher than the third point 510-3.

According to an embodiment, a first length corresponding to a flat state of the first wrinkle pattern may be shorter than a second length corresponding to a flat state of the second wrinkle pattern. The second length may be shorter than a third length corresponding to a flat state of the third wrinkle pattern. The third length may be shorter than a fourth length corresponding to a flat state of the fourth wrinkle pattern.

According to an embodiment, the first length corresponding to the flat state of the first wrinkle pattern positioned at the center 510-1 of the first height 170 may be shorter than a length corresponding to a flat state of a wrinkle pattern positioned at a point higher than the center 510-1 of the first height 170, and a length corresponding to a flat state of a wrinkle pattern positioned at a point lower than the center 510-1 of the first height 170.

According to an embodiment, the electrode assembly 100 may be folded along a first path ① or a second path ② with reference to the center 510-1.

Referring to (b) and (c) of FIG. 5A, an electrode substrate 500 (for example, the anode substrate 101, the cathode substrate 102) of the electrode assembly 100 may include a first coating portion 501 and a second coating portion 502 corresponding to portions coated with an active material, and a non-coating portion 503 that is not coated with the active material. The non-coating portion 503 may be formed in a wrinkle pattern.

According to an embodiment, a height t2 522 of the wrinkle pattern may be smaller than a height t1 521 of a portion coated with the active material. The wrinkle pattern may form at least one folding axis within a range that is smaller than the height t1 of the portion coated with the active material.

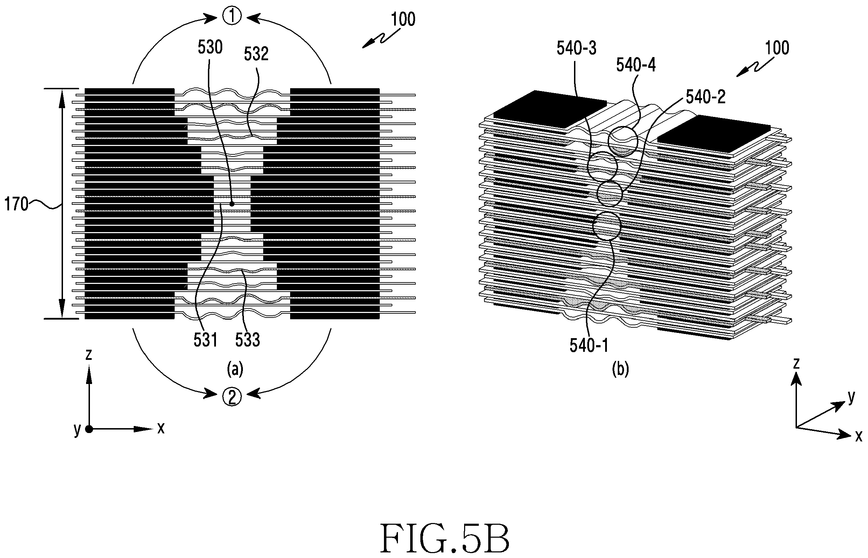

FIG. 5B is a diagram illustrating a shape of a wrinkle patterns having flexibility in both directions according to various embodiments.

Referring to FIG. 5B, (a) illustrates an electrode assembly 100 having coating portions of different lengths, and (b) of FIG. 5B illustrates the electrode assembly shown in (a) of FIG. 5B as viewed from a side.

Referring to (a) of FIG. 5B, a first length corresponding to a flat state of a first wrinkle pattern 531 positioned at a first point 530, which is the center of the electrode assembly 100, may be shorter than a second length corresponding to a flat state of a second wrinkle pattern 532 positioned at a point higher than the first point 530, and a third length corresponding to a flat state of a third wrinkle pattern 533 positioned at a point lower than the first point 530.

According to an embodiment, a length of a coating portion positioned at the height of the first point 530 of the electrode assembly 100 may be longer than a length of a coating portion positioned at a point higher than the height of the first point 530, and a length of a coating potion positioned at a point lower than the height of the first point 530. The coating portion of the electrode assembly 100 may be symmetric with reference to a virtual line which passes by the first point 530 and is parallel to the z-axis. The wrinkle pattern of the electrode assembly 100 may be symmetric with reference to a virtual line that passes by the first point 530 and is parallel to the x-axis.

Referring to (b) of FIG. 5B, the first wrinkle pattern positioned at the first point 540-1 may be flat. The second wrinkle pattern positioned at a second point 540-2 may form at least one first folding axis. The third wrinkle pattern positioned at a third point 540-3 may form at least one second folding axis. A fourth wrinkle pattern positioned at a fourth point 540-4 may form at least one third folding axis. The number of the first folding axes may be less than the number of the second folding axes, and the number of the second folding axes may be smaller than the number of the third folding axes.

According to an embodiment, the electrode assembly 100 may be folded along a first path ① or a second path ② with reference to the first point 540-1 which is the center thereof.

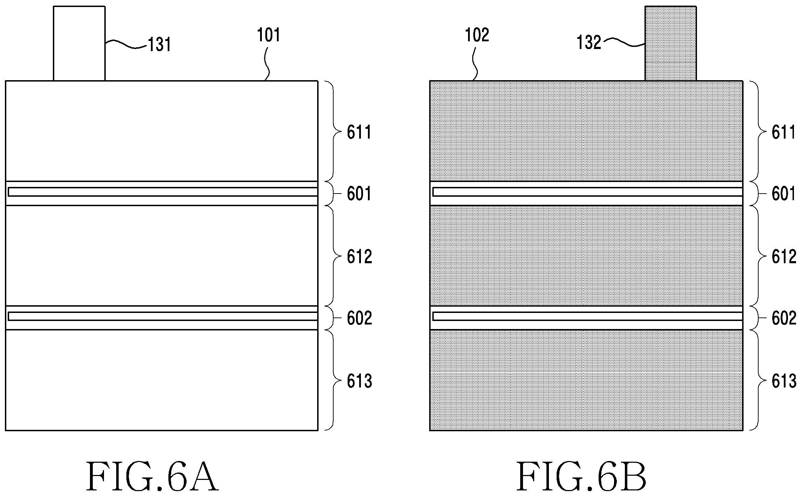

FIGS. 6A and 6B are diagrams illustrating an electrode substrate having two wrinkle patterns according to various embodiments.

FIG. 6A illustrates two wrinkle patterns (for example, a first folding portion 601, a second folding portion 602) formed on an anode substrate 101, and FIG. 6B illustrates two wrinkle patterns formed on a cathode substrate 102. Hereinafter, descriptions of the anode substrate 101 may be substantially applied to the cathode substrate 102.

Referring to FIG. 6A, the anode substrate 101 may include a first portion 611, a second portion 612, a third portion 613, a first folding portion 601 disposed between the first portion 611 and the second portion 612, and a second folding portion 602 disposed between the second portion 612 and the third portion 613. The first folding portion 601 and the second folding portion 602 may be understood as non-coating portions that are not coated with an anode active material, and may be formed in a wrinkle pattern. The first portion 611 and the second portion 612 may be folded to form a predetermined angle with reference to the first folding portion 601. The second portion 612 and the third portion 613 may be folded to form a predetermined angle with reference to the second folding portion 602.

Referring to FIG. 6B, the cathode substrate 102 may include a first portion 611, a second portion 612, a third portion 613, a first folding portion 601 disposed between the first portion 611 and the second portion 612, and a second folding portion 602 disposed between the second portion 612 and the third portion 613.

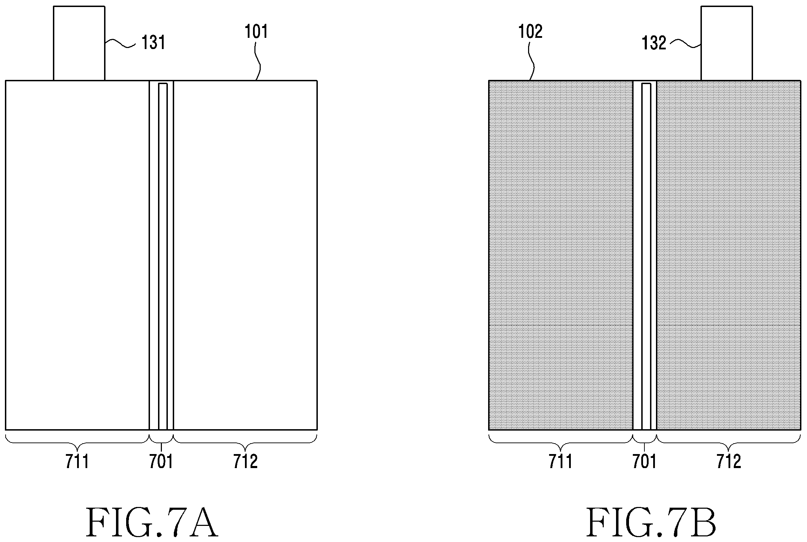

FIGS. 7A and 7B are diagrams illustrating an electrode substrate having a wrinkle pattern in a vertical direction according to various embodiments.

FIG. 7A illustrates a wrinkle pattern of a vertical direction (for example, a folding portion 701) formed on an anode substrate 101, and FIG. 7B illustrates a wrinkle pattern of a vertical direction (for example, a folding portion 701) formed on a cathode substrate 102. The following descriptions of the anode substrate 101 may be substantially applied to the cathode substrate 102.

Referring to FIG. 7A, the anode substrate 101 may include a first portion 711, a second portion 712, and a folding portion 701 disposed between the first portion 711 and the second portion 712. The folding portion 701 may be understood as a non-coating portion that is not coated with an anode active material, and may be formed in a wrinkle pattern. The first portion 711 and the second portion 712 may be folded to form a predetermined angle with reference to the folding portion 701.

Referring to FIG. 7B, the cathode substrate 102 may include a first portion 711, a second portion 712, and a folding portion 701 disposed between the first portion 711 and the second portion 712. The first portion 711 and the second portion 712 may be folded to form a predetermined angle with reference to the folding portion 701.

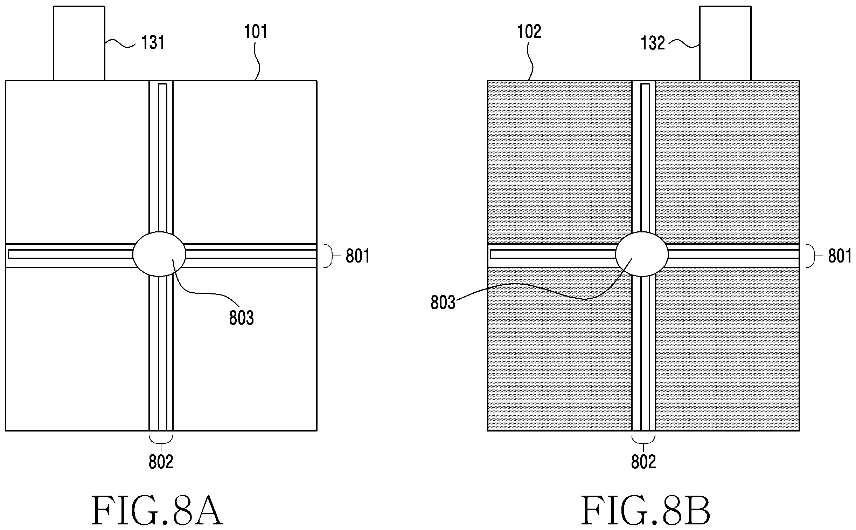

FIGS. 8A and 8B are diagrams illustrating an electrode substrate having a wrinkle pattern in horizontal and vertical directions according to various embodiments.

FIG. 8A illustrates an anode substrate 101 having a wrinkle pattern in horizontal and vertical directions, and FIG. 8B illustrates a cathode substrate 102 having a wrinkle pattern in horizontal and vertical directions.

Referring to FIG. 8A, the anode substrate 101 may include a first folding portion 801 in the horizontal direction and a second folding portion 802 in the vertical direction, and an opening 803 may be formed on a portion where the first folding portion 801 and the second folding portion 802 intersect. The first folding portion 801 and the second folding portion 802 may be formed in a wrinkle pattern.

Referring to FIG. 8B, the cathode substrate 102 may include a first folding portion 801 in the horizontal direction and a second folding portion 802 in the vertical direction, and an opening 803 may be formed on a portion where the first folding portion 801 and the second folding portion 802 intersect. The first folding portion 801 and the second folding portion 802 may be formed in a wrinkle pattern.

Referring FIGS. 8A and 8B, the opening 803 disposed at the point where the first folding portion 801 and the second folding portion 802 intersect may reduce concentration of a stress occurring due to folding of the intersecting portions of the first folding portion 801 and the second folding portion 802.

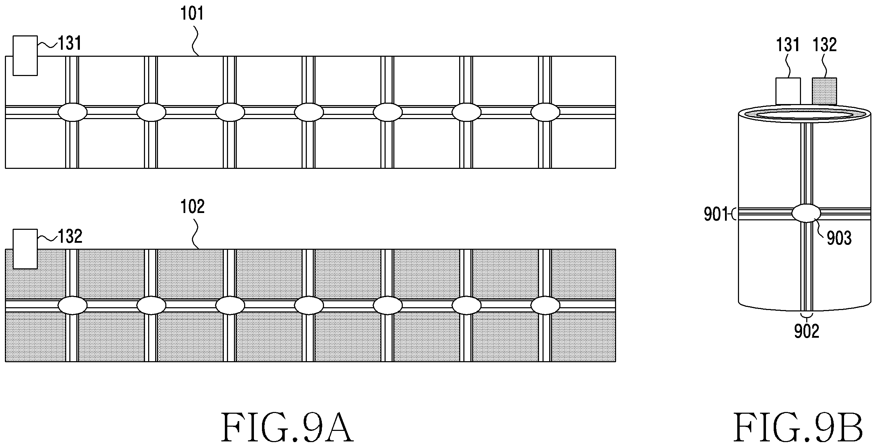

FIGS. 9A and 9B are diagrams illustrating illustrates an electrode assembly of a jelly roll type formed through an electrode substrate having a wrinkle pattern in horizontal and vertical directions according to various embodiments.

FIG. 9A illustrates an anode substrate 101 and a cathode substrate which have wrinkle patterns in horizontal and vertical directions, and FIG. 9B illustrates an electrode assembly of a jelly roll type which is formed using the anode substrate 101 and the cathode substrate 102 illustrated in FIG. 9A.

Referring to FIG. 9A, the anode substrate 101 and the cathode substrate 102 may include wrinkle patterns in the horizontal direction and a plurality of wrinkle patterns in the vertical direction.

Referring to FIG. 9B, the electrode assembly may include the wrinkle pattern 901 in the horizontal direction and the wrinkle pattern 902 in the vertical direction using the anode substrate 101 and the cathode substrate 102 shown in FIG. 9A. The electrode assembly may be formed by winding the anode substrate 101 and the cathode substrate 102 to have the plurality of openings and the plurality of wrinkle patterns in the vertical direction, shown in FIG. 9A, aligned with one another.

According to an example embodiment, an electronic device may include: an electrode assembly including a plurality of anode substrates, a plurality of cathode substrates, and a separation membrane disposed between each of the anode substrates and each of the cathode substrates, the respective anode substrates and the respective cathode substrates being alternately arranged, each of the anode substrates may include a first coating portion, a second coating portion, and a first non-coating portion disposed between the first coating portion and the second coating portion, each of the cathode substrates may include a third coating portion, a fourth coating portion, and a second non-coating portion disposed between the third coating portion and the fourth coating portion, the first non-coating portion and the second non-coating portion may form a wrinkle pattern, the electrode assembly may have a first height, and a first length corresponding to a flat state, the first length of a first wrinkle pattern positioned at a center of the first height may be shorter than a second length corresponding to a flat state of a second wrinkle pattern positioned at a point higher than the center of the first height, and the first length may be shorter than a third length corresponding to a flat state of a third wrinkle pattern positioned at a point lower than the center of the first height.

According to an example embodiment, the first coating portion and the second coating portion may be formed with an anode active material.

According to an example embodiment, the anode active material may be coated over at least one surface of each of the anode substrates.

According to an example embodiment, the third coating portion and the fourth coating portion may be formed with a cathode active material.

According to an example embodiment, the cathode active material may be coated over at least one surface of each of the cathode substrates.

According to an example embodiment, the first coating portion and the second coating portion may be formed to have a first thickness from a first surface facing a first direction of each of the anode substrates along the first direction, and may be formed to have a second thickness from a second surface facing a second direction of each of the anode substrates along the second direction.

According to an example embodiment, the first thickness and the second thickness may be the same as each other.

According to an example embodiment, the wrinkle pattern may form at least one folding axis to enable the second coating portion to be folded with respect to the first coating portion, and to enable the fourth coating portion to be folded with respect to the third coating portion.

According to an example embodiment, the wrinkle pattern may be configured to be folded along a first path or a second path opposite to the first path.

According to an example embodiment, a height of the wrinkle pattern may be shorter than a shortest distance between a coating surface of an active material coated over a first surface of each electrode substrate including each of the anode substrates and each of the cathode substrates, and a coating surface of an active material coated over a second surface of each electrode substrate, and the coating surface may not be in contact with each of the electrode substrates and may be parallel to the first surface.

According to an example embodiment, a length of the first coating portion may be the same as a length of the second coating portion, a length of the third coating portion may be the same as a length of the fourth coating portion, and a direction of the length may be from the first coating portion toward the second coating portion.

According to an example embodiment, the length of the first coating portion may be shorter than the length of the third coating portion, and the length of the second coating portion may be shorter than the length of the fourth coating portion.

According to an example embodiment, the electronic device may include an anode tab attached to each of the anode substrates and a cathode tab attached to each of the cathode substrates in a direction perpendicular to at least one folding axis formed by the wrinkle pattern.

According to an example embodiment, the electronic device may include a wrinkle pattern which forms at least one second folding axis perpendicular to at least one first folding axis formed by the wrinkle pattern.

According to an example embodiment, an opening may be formed at a point where the at least one first folding axis and the at least one second folding axis intersect.

According to an example embodiment, an electronic device may include: an electrode assembly including a plurality of anode substrates, a plurality of cathode substrates, and a separation membrane disposed between each of the anode substrates and each of the cathode substrates, the respective anode substrates and the respective cathode substrates being alternately arranged, each of the anode substrates may include a first coating portion, a second coating portion, a third coating portion, a first non-coating portion disposed between the first coating portion and the second coating portion, and a second non-coating portion disposed between the second coating portion and the third coating portion, each of the cathode substrates may include a fourth coating portion, a fifth coating portion, a sixth coating portion, a third non-coating portion disposed between the fourth coating portion and the fifth coating portion, and a fourth non-coating portion disposed between the fifth coating portion and the sixth coating portion, the first non-coating portion, the second non-coating portion, the third non-coating portion, and the fourth non-coating portion may be configured to form a wrinkle pattern, the electrode assembly may have a first height, and a first length corresponding to a flat state of a first wrinkle pattern positioned at a center of the first height, the first length may be shorter than a second length corresponding to a flat state of a second wrinkle pattern positioned at a point higher than the center of the first height, and the first length may be shorter than a third length corresponding to a flat state of a third wrinkle pattern positioned at a point lower than the center of the first height.

According to an example embodiment, the third coating portion and the fourth coating portion may be formed to have a first thickness from a first surface facing a first direction of each of the cathode substrates along the first direction, and may be formed to have a second thickness from a second surface facing a second direction of each of the cathode substrates along the second direction.

According to an example embodiment, the first thickness and the second thickness may be the same as each other.

According to an example embodiment, the wrinkle pattern may form at least one folding axis to enable each of the anode substrates and each of the cathode substrates to be folded.

According to an example embodiment, the wrinkle pattern may be formed to be folded along a first path or a second path opposite to the first path.

Effects which can be acquired by the disclosure are not limited to the above described effects, and other effects that have not been mentioned may be clearly understood by those skilled in the art from the following description.

In the above-described example embodiments of the disclosure, a component included in the disclosure is expressed in the singular or the plural according to a presented example embodiment. However, the singular form or plural form is selected for convenience of description suitable for the presented situation, and various embodiments of the disclosure are not limited to a single element or multiple elements thereof. Further, either multiple elements expressed in the description may be configured into a single element or a single element in the description may be configured into multiple elements.

While the disclosure has been illustrated and described with reference to various example embodiments thereof, it will be understood that the various example embodiments are intended to be illustrative, not limiting. It will be further understood by those skilled in the art that various changes in form and detail may be made therein without departing from the scope of the disclosure, including the appended claims and equivalents thereof. It will also be understood that any of the embodiment(s) described herein may be used in conjunction with any other embodiment(s) described herein.

## Claims

1. An electronic device comprising:
an electrode assembly comprising a plurality of anode substrates, a plurality of cathode substrates, and a separation membrane disposed between each of the anode substrates and each of the cathode substrates, respective anode substrates and respective cathode substrates being alternately arranged,
wherein each of the anode substrates comprises a first coating portion, a second coating portion, and a first non-coating portion disposed between the first coating portion and the second coating portion,
wherein each of the cathode substrates comprises a third coating portion, a fourth coating portion, and a second non-coating portion disposed between the third coating portion and the fourth coating portion,
wherein the first non-coating portion and the second non-coating portion are configured to form a wrinkle pattern,
wherein the electrode assembly has a first height, and
wherein a first length corresponding to a flat state of a first wrinkle pattern positioned at a center of the first height is shorter than a second length corresponding to a flat state of a second wrinkle pattern positioned at a point higher than the center of the first height, and the first length is shorter than a third length corresponding to a flat state of a third wrinkle pattern positioned at a point lower than the center of the first height.

2. The electronic device of claim 1, wherein the first coating portion and the second coating portion comprise an anode active material.

3. The electronic device of claim 2, wherein the anode active material is coated over at least one surface of each of the anode substrates.

4. The electronic device of claim 1, wherein the third coating portion and the fourth coating portion comprise a cathode active material.

5. The electronic device of claim 4, wherein the cathode active material is coated over at least one surface of each of the cathode substrates.

6. The electronic device of claim 1, wherein the first coating portion and the second coating portion have a first thickness from a first surface facing a first direction of each of the anode substrates along the first direction, and have a second thickness from a second surface facing a second direction of each of the anode substrates along the second direction.

7. The electronic device of claim 6, wherein the first thickness and the second thickness are the same.

8. The electronic device of claim 1, wherein the wrinkle pattern includes at least one folding axis to enable the second coating portion to be folded with respect to the first coating portion, and to enable the fourth coating portion to be folded with respect to the third coating portion.

9. The electronic device of claim 8, wherein the wrinkle pattern is configured to be folded along a first path or a second path opposite to the first path.

10. The electronic device of claim 1, wherein a height of the wrinkle pattern is shorter than a shortest distance between a coating surface of an active material coated over a first surface of each electrode substrate comprising each of the anode substrates and each of the cathode substrates, and a coating surface of an active material coated over a second surface of each electrode substrate, and the coating surface is not in contact with each of the electrode substrates and is parallel to the first surface.

11. The electronic device of claim 1, wherein a length of the first coating portion is the same as a length of the second coating portion, a length of the third coating portion is the same as a length of the fourth coating portion, and a direction of the length is from the first coating portion toward the second coating portion.

12. The electronic device of claim 11, wherein the length of the first coating portion is shorter than the length of the third coating portion, and the length of the second coating portion is shorter than the length of the fourth coating portion.

13. The electronic device of claim 1, comprising an anode tab attached to each of the anode substrates and a cathode tab attached to each of the cathode substrates along a direction perpendicular to at least one folding axis formed by the wrinkle pattern.

14. The electronic device of claim 1, comprising a wrinkle pattern including at least one second folding axis perpendicular to at least one first folding axis formed by the wrinkle pattern.

15. The electronic device of claim 14, wherein an opening is formed at a point where the at least one first folding axis and the at least one second folding axis intersect.
